# EUROPEAN PATENT APPLICATION

(11) **EP 2 040 228 A1**
(43) Date of publication of application: **25.03.2009**
(21) Application number: 07116858.7
(22) Date of filing: 20.09.2007
(51) Int. Cl.: G07F 7/10, G06F 21/00

(54) **System, method and device for enabling secure and user-friendly interaction**

(71) Applicant: TDS TODOS DATA SYSTEM AB, 414 58 Göteborg (SE)
(72) Inventor: Gullberg, Peter, SE-421 60, VÄSTRA FRÖLUNDA (SE)
(74) Representative: Fritsche, Daniel

(57) **Abstract**

A code-generating device (6a-c), for enabling secure and user-friendly interaction between a user (2a-c) and a transaction service provider (3), the code-generating device having an image acquisition unit (12) and processing circuitry (20) configured to interact with a cryptographic module (25). The processing circuitry (20) is adapted to acquire, through the image acquisition unit (12), an image (33; 44) provided by the transaction service provider (3), the image encoding a transaction-specific code; to decode the image (33; 44) to generate the transaction-specific code; and to process the transaction-specific code, utilizing the cryptographic module (25) for at least a part of the processing, such that a response code is generated, the response code being unique for the user (2a-c) and verifiable by the transaction service provider (3), thereby enabling secure authentication of the transaction.

## Description

### Technical Field of the Invention

The present invention relates to a code-generating device for enabling secure and user-friendly interaction between a user and a transaction service provider.

The invention also relates to a transaction server system and a secure transaction system comprising such a code-generating device and transaction server system.

The invention further relates to a method for secure and user-friendly interaction between a transaction service provider and a user having a code-generating device.

### Technical Background

There are currently several methods for securing on-line transactions, such as on-line banking. Some of these methods rely upon one-time codes having previously been provided to a registered user, for example, through a letter in the mail. The need for a user to have access to a piece of paper with his personalized one-time codes in order to interact with his online bank or other transaction service provider severely restricts the mobility of the service (the user may leave the piece of paper at home), or decreases the security (the user may keep the codes in his wallet to have them with him at all times).

According to other methods for securing one-line transactions, each user is provided with his personalized code-generating device, whereby the user can, when appropriate, generate codes which can be used as, for example, passwords or digital signatures.

In the case of, for example, signing a transaction, a challenge code, generated by a transaction server system, is typically displayed to the user on the display of the user's communication device, such as an internet-connected computer or a mobile phone. The user subsequently enters this challenge code in his code-generating device. Based on the entered code, the code-generating device generates a response code, a digital signature, which the user provides to the transaction server system through his communication device. If the digital signature can be verified by the transaction server system, the transaction is carried out.

Entering of such, often very long, codes into the code-generating device may, however, be seen as cumbersome by the user, which may motivate the transaction service provider to make a trade-off between security and ease-of-use which may, for example, involve limiting the complexity and/or occurrence of digital signature challenges. Hereby, the security level is decreased without achieving a truly user-friendly method for secure interaction.

### Summary of the Invention

In view of the above-mentioned and other drawbacks of the prior art, a general object of the present invention is to provide an improved secure transaction system, in particular, a more user-friendly secure transaction system.

According to a first aspect of the present invention, these and other objects are achieved through a code-generating device for enabling secure and user-friendly interaction between a user and a transaction service provider, the code-generating device having an image acquisition unit, and processing circuitry configured to interact with a cryptographic module, wherein the processing circuitry is adapted to acquire, through the image acquisition unit, an image provided by the transaction service provider, the image encoding a transaction-specific code, decode the image to generate the transaction-specific code, and process the transaction-specific code, utilizing the cryptographic module for at least a part of the processing, such that a response code is generated, the response code being unique for the user and verifiable by the transaction server system, thereby enabling secure authentication of the transaction

By "transaction service provider" should, in the context of the present application, be understood any entity which enables a registered user to perform any kind of transaction. Examples of transaction service providers include, for example, banks, authorities, stock brokers etc. The transaction service provider is typically embodied as a transaction server system which is configured to interact with its users over a network.

Typical transactions include, for example, login, transfer of funds, payment, etc.

Consequently, a transaction-specific code should be understood as a code which is issued by the transaction service provider in connection with a particular transaction, and to which the transaction service provider requires a valid response code, which can be verified to originate from the user before performing the transaction.

In the case of the transaction being a login, the transaction-specific code may include a challenge, and the required response code a valid response to that challenge; and in the case of the transaction being a transfer of funds, the transaction-specific code may include a code indicative of transaction details, such as a source account, a destination account and an amount to transfer, and the required response code may be a digital signature.

The image encoding the transaction-specific code may be displayed on a display device or be printed on a transaction document, such as a money transfer order.

The "cryptographic module" is a software or hardware module which is adapted to perform cryptographic operations. Such cryptographic operations may, for example, include encryption, decryption, cryptographic hash function or generation of a message authentication code (MAC) on data using a user-specific cryptographic key. Encryption and/or decryption may be performed by means of a symmetric cryptographic algorithm, such as, for example, triple-DES, or an asymmetric cryptographic algorithm, such as, for example RSA, while generation of a MAC may be performed by means of a triple-DES MAC, and generation of a cryptographic hash function may be performed by means of for example SHA-1, or through a combination of the above mentioned cryptographic algorithms. In any case, the cryptographic module contains a representation of a user-specific secret cryptographic key which may be utilized to decrypt encrypted messages received from the transaction service provider.

The "image acquisition unit" may be any unit capable of acquiring image information, such as, for example, a camera module (including an imaging chip and possibly an optical element, such as a lens), or a simple scanner, such as a barcode reader.

The present invention is based upon the realization that an increased level of security and user-friendliness in the interaction between a transaction service provider and a user is obtainable by providing means for easily and effortlessly transferring encrypted information from the transaction service provider to the user and enabling the user to verify and review the information in the secure environment of his own code-generation device, secured by his personal cryptographic module, previously issued by the transaction service provider.

In order to enable such a transfer of encrypted information, the user and the transaction service provider should, at the time of the transaction, have an established relation. In particular, both parties should preferably have access to a cryptographic key related to the other (such as the public key of the other party in a public key infrastructure situation).

By acquiring a transaction-specific code, such as a request to sign for a monetary transfer, in the form of an image, it will not be perceived by a user as taxing or tedious to input this code in his code-generating device.

Furthermore, the risk of incorrect input is practically removed.
Consequently, the present invention enables the transaction service provider to maintain a high security level (for example through an extended length of the transaction-specific code) in a user-friendly manner.

Additionally, the risk of so-called shoulder surfing (a person other than the user gaining access to the transaction information by "looking over the shoulder" of the user) is practically eliminated, since only the user is typically able to have the image decoded and decrypted.

The processing circuitry may further be adapted to display the response code to the user by means of a display device comprised in the code-generating device.

Hereby, the user is enabled to manually enter the response code by means of, for example, a key pad provided on a user communication device, such as a personal computer, a mobile phone, or an automated teller machine (ATM), which is in secure communication with the transaction service provider.

Moreover, the processing circuitry comprised in the code-generating device may further be configured to perform a cryptographic operation on the transaction-specific code to generate a message authentication code unique for the transaction-specific code, thereby enabling verification of the transaction-specific code.

One example of a cryptographic operation for generating a message authentication code is to apply a symmetric cryptographic algorithm, such as triple-DES MAC on the transaction-specific code, whereby a verifiable authentication code is formed.

Another example of a cryptographic operation for generating a message authentication code is to perform a hash function, such as an SHA-1 hash function, on the transaction-specific code and then sign the resulting hash value using the private key (such as a private RSA-key) of the transaction service provider, to create a message authentication code that can be verified coming from the transaction service provider.

The image provided by the transaction service provider may, to this end, advantageously include a so-called message authentication code (MAC) which is unique for the transaction-specific code that is also encoded in the image. After having acquired and decoded the image, the code-generating device can then generate a corresponding authentication code to compare with the MAC that was included in the image. If the received MAC and the locally generated MAC correspond, then the transaction-specific code is authentic.

Furthermore, the processing circuitry may be adapted to request the user to enter a personal identification number prior to generating the response code.

Through the entry of a personal identification number (PIN), the user presence is established, further increasing the security of the transaction.

Moreover, the processing circuitry comprised in the code-generating device may advantageously further be configured to receive a code indicative of a transaction-specific sequence of predetermined functions to be performed by the code-generating device, each of the predetermined functions involving prompting the user to indicate a respective function-related value; evaluate the code indicative of the transaction-specific sequence; perform, based on the evaluation, the transaction-specific sequence of predetermined functions, resulting in a sequence of function-related values; and determine the response code based on the sequence of function-related values.

In this embodiment of the invention, the response code is determined based on the sequence of function-related values in addition to the above-mentioned transaction-specific code encoded in the acquired image.

The code indicative of the transaction-specific sequence of predetermined functions may be presented to the user in clear-text for manual entry into the code-generating device, or may be included in the transaction-specific code encoded in the image acquired through the image acquisition unit of the code-generating device.

The code indicative of the transaction-specific sequence of functions may advantageously be determined by the transaction service provider based on the estimated risk of the particular transaction.

Each of the predetermined functions to be performed by the code-generating device involves requesting the user to indicate a function-related value. One example of such a predetermined function may be to request the user to indicate a value, which may, for example, be related to the transaction or be related to the identity of the user, by providing the value via the information acquisition means. Another example of a predetermined function may be to request the user to acknowledge a message displayed to the user, whereby a value that represents this message is indicated by the user.

Function-related values may thus, for example, include values indicative of transaction-specific details, such as destination account number etc; values indicative of user-specific details, such as the user's address, telephone number etc; and values indicative of messages displayed to the user, which may relate to the type of requested transaction, such as international transfer, change of personal information etc.

Following input of the final function-related value, the response code is determined based on the sequence of function-related values indicated by the user.

Hereby, the response code can, depending on the security level required by the transaction service provider, indicate user presence, user awareness of the details of the transaction, user identity, time of transaction etc.

In case the risk of the transaction is believed to be low, the user may be required to only enter the transaction-specific code and his PIN into the code-generating device, whereafter the code-generating device generates a response code. In this case, the transaction-specific sequence is formed by the single predetermined function of requesting entry of the user's PIN, and the transaction-specific response code is determined based on the transaction-specific code and the PIN indicated by the user.

In case of a medium level of risk, a predetermined message may be displayed to the user and the user may be prompted to confirm the content of the message, which may involve his intention to perform, for example, an international transfer of funds, by pressing "OK" on a key pad provided on the code-generating device, and then enter his PIN into the code-generating device, whereafter the code-generating device generates a response code based on a value indicative of the predetermined message and the user's PIN.

Finally, in case of a high risk transaction, the user may be required to actively enter, into the code-generating device, information such as destination account, currency, amount, and finally his PIN, before the code-generating device calculates a response code indicative of the sequence of function-related values indicated by the user.

Which sequence of functions should be performed by the code-generating device is determined by the transaction-specific code presented by the transaction service provider. It should here be noted that the user is not required to have any knowledge of - and is in fact typically unaware of - which sequence of predetermined functions that the transaction-specific code represents.

The user can thus generate the response code "off-line" in the secure environment of his own code-generating device. This reduces the risk for the user of performing, by mistake, a transaction that he was not intending to perform. Moreover, practically all types of so-called man-in-the-middle attacks are prevented.

Furthermore, the function-related values indicated by the user are included as input to the resulting response code, whereby, a very strong and secured act-of-will on behalf of the user can be communicated to the transaction service provider. This provides the transaction service provider with a strengthened non-repudiation for the transaction.

In summary, the ability of the code-generating device to recognize and react to a "security-level code" included in the transaction-specific code enables the transaction service provider, such as a bank, to implement the harshest security measures where these are warranted and prioritize user-convenience for transactions which are considered to involve a lower level of risk.

The transaction-specific code may advantageously comprise a first sub-code indicative of the transaction-specific sequence of predetermined functions and a second sub-code being a function of the first sub-code, and the processing circuitry may further be configured to evaluate the second sub-code to verify a correctness of the first sub-code.

Hereby, the code-generating device can be prevented from responding to an erroneous entry of the transaction-specific code by initiating a sequence of predetermined functions, which does not correspond to the requested transaction. This increases the user's trust in the code-generating device.

Moreover, the transaction-specific code may further include a challenge value which is indicative of the point in time of the transaction. For example, the challenge value can be indicative of the session involving the transaction.

The image acquired by the code-generating device may advantageously include a barcode.

The barcode may be a one-dimensional barcode or a two-dimensional barcode, where the latter is preferred due to the larger amount of information that can be encoded in such a barcode.

According to one embodiment, the response code may include a one time code (OTC).

According to this embodiment, the image encoding the transaction-specific code, in this case a challenge, is provided by the transaction service provider upon a login attempt, resulting in a one time code, which the user can return to the transaction service provider to gain access to the further services of the transaction service provider.

According to another embodiment, the response code may be a signature, such as a so-called digital signature or electronic signature.

According to this embodiment, the image encoding the transaction-specific code, in this case a code indicative of a transaction to be signed, is provided by the transaction service provider before carrying out a requested transaction, and the response code includes a signature.

The code-generating device may, furthermore, be configured to decrypt encrypted transaction information comprised in the transaction-specific code, and display the decrypted transaction information to the user by means of a display unit comprised in the code-generating device.

Hereby, it can be verified to the user, in the secure and trusted environment of his own code-generating device interacting with his personal cryptographic module, that the transaction service provider is genuine and/or that the transaction to be performed is, in fact, the one that was requested.

It should be noted that the transaction-specific code, in this case, should also be user-specific in the sense that only the correct user (using his own code-generating device and cryptographic module) is capable of generating a valid response code.

The code-generating device may further comprise a connector for connecting the processing circuitry to a removably arranged electronic circuit comprising the cryptographic module.

In this embodiment, the cryptographic module associated with the user may preferably be provided in the form of a removable electronic circuit, such as the secure chip on a so-called smart card, the code-generating device having a connector configured to enable communication between the processing circuitry comprised in the code-generating device and the removable electronic circuit.

Alternatively, the code-generating device may comprise a wireless interface for enabling wireless communication with an external cryptographic module.

According to a further alternative, the cryptographic module may be comprised in the processing circuitry.

According to a second aspect of the present invention, the above-mentioned and other objects are achieved through a transaction server system comprising a database for storing user data, a network interface for enabling communication with a plurality of user communication devices over a network and processing circuitry for performing transaction operations, wherein the processing circuitry is adapted to encode a transaction-specific code into transaction-specific image data, transmit, to a user-communication device, the transaction-specific image data, thereby enabling display of the image to a user, receive a response code from the user-communication device, evaluate the response code, and if the response code is valid, carry out the transaction.

The user data may, for example, include user ID, a seed for creation of a user-specific cryptographic key and account details for the user.

Effects and features of this second aspect of the present invention are largely analogous to those described above in connection with the first embodiment.

The code-generating device and the transaction server system according to the present invention may, furthermore, be included in a secure transaction system, further comprising a user communication device which is in connection with the transaction server system and configured to display an image to the user, and to receive transaction-related input from the user.

According to one embodiment, the user communication device may be a personal computer.

This is typically the case for online banking systems, where the user handles his accounts and performs transactions, such as paying bills, over the internet.

According to another embodiment, the user communication device may be a mobile phone or a personal digital assistant (PDA).

According to yet another embodiment, the user communication device may be an automated teller machine (ATM).

When interacting with an ATM, the user may be presented with an image for login and/or signing of transactions as outlined above in connection with the first aspect of the present invention.

Hereby, the security and integrity is increased, since skimming and shoulder surfing are rendered impossible. Furthermore, additional services may be provided at the ATM, making it more of an online bank than a simple cash machine.

According to a third aspect of the present invention, the above-mentioned and other objects are achieved through a method, for secure and user-friendly interaction between a transaction service provider and a user having a code-generating device, the code-generating device including an image acquisition unit, and processing circuitry adapted to interact with a cryptographic module, the method comprising the steps of acquiring, by means of the image acquisition unit, an image provided by the transaction service provider, the image encoding a transaction-specific code; decoding the image to generate the transaction-specific code, processing the transaction-specific code, utilizing the cryptographic module for at least a part of the processing, such that a response code is generated, the response code being unique for the user and verifiable by the transaction service provider, thereby enabling secure authentication of the transaction.

Effects and features of this third aspect of the present invention are largely analogous to those described above in connection with the first embodiment.

Additionally, the above-mentioned and other objects are achieved through a computer program module configured to perform the steps of the method according to present invention when run on a processing circuitry comprised in a code-generating device according to the invention.

### Brief Description of the Drawings

These and other aspects of the present invention will now be described in more detail, with reference to the appended drawings showing a currently preferred embodiment of the invention, wherein:
Fig 1 schematically illustrates a secure transaction system according to the present invention;
Fig 2 is a flow-chart schematically illustrating an exemplary transaction authorization method performed by the transaction server system in fig 1;
Fig 3 is a schematic plane view of a code-generating device according to a preferred embodiment of the present invention as seen from the front and from the side;
Fig 4 is a schematic block diagram of the code-generating device in fig 3;
Fig 5 is a schematic illustration of a first example of a display image presented to a user when in interaction with the system in fig 1;
Fig 6 is a flow-chart schematically illustrating a first embodiment of the method according to the present invention carried out in response to the display image in fig 5;
Fig 7 is a schematic illustration of a second example of a display image presented to a user when in interaction with the system in fig 1;
Fig 8 is a flow-chart schematically illustrating a second embodiment of the method according to the present invention carried out in response to the display image in fig 7;
Fig 9 is a schematic illustration of information exchange between a user and a transaction service provider and between the user and an embodiment of the code-generating device according to the present invention when performing an exemplary transaction involving dynamic security;
Fig 10 is a flow-chart schematically illustrating a further exemplary transaction authorization method performed by the transaction server system in fig 1;
Fig 11 is a flow-chart schematically illustrating an embodiment of the method according to the present invention and its relation to the transaction authorization method in fig 10;
Fig 12 is a flow-chart schematically illustrating a third embodiment of the method according to the present invention carried out in response to the display image in fig 7.

### Detailed Description of a Preferred Embodiment of the Invention

In the following description, the present invention is described with reference to a secure transaction system in which each user is in secure connection with a transaction server system through an internet-connected personal computer. Furthermore, the code-generating device is provided with a display and a key pad as a user interface.

It should be noted that this by no means limits the scope of the invention, which is equally applicable to secure transaction systems in which the users are connected to the transaction service provider through other kinds of user communication devices, such as mobile phones or automated teller machines (ATMs), or in which different users are utilizing different kinds of user communication devices.

Additionally, the code-generating device may have any other kind of user input means other than a keypad, such as a touch display, a so-called click wheel etc.

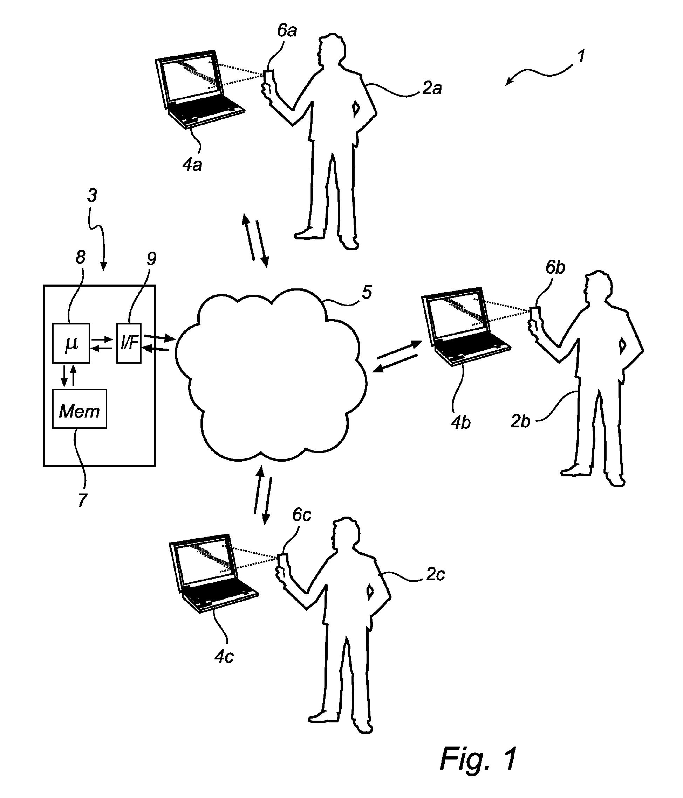

Fig 1 schematically illustrates a secure transaction system 1, in which each of a plurality of users 2a-c communicates with a transaction service provider, here embodied by a transaction server system 3, through their respective personal computers 4a-c which are securely connected to the transaction server system 3 over a network 5, such as the internet.

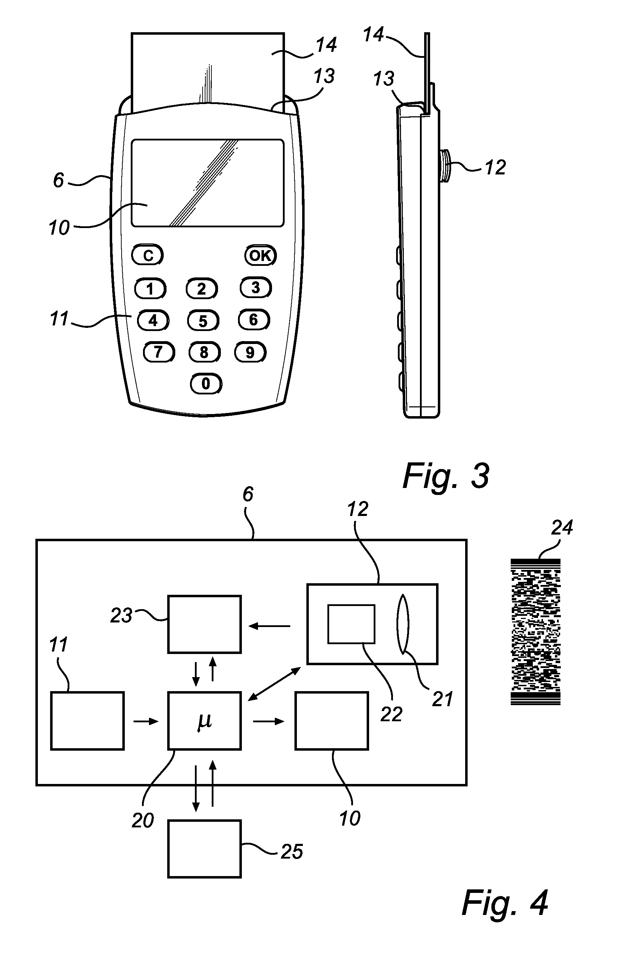

Each user 2a-c has his personal code-generating device 6a-c which is equipped with an image acquisition unit, such as a camera unit, for enabling the user 2a-c to acquire an image transmitted by the transaction server system 3 and displayed on the display of his personal computer 4a-c. This code-generating device 6a-c will be described in more detail below in connection with figs 3 and 4.

The transaction server system 3 includes a database 7 for storing user data, such as, for each user, a user ID, a seed for creation of a user-specific cryptographic key and account details. The database 7, which is here illustrated as a computer memory in a transaction server, may be provided internally to the transaction server or may reside in a (possibly remotely located) separate device which may be configured to communicate data stored in the database with one or several transaction servers. The transaction server system 3 additionally includes processing circuitry 8, which is configured to communicate with the database 7, and a network interface 9, through which the transaction server system 3 communicates with the user communication devices 4a-c over the network 5. The processing circuitry 8 further comprises a cryptographic module, which is, in this context, often referred to as a Host Security Module (HSM).

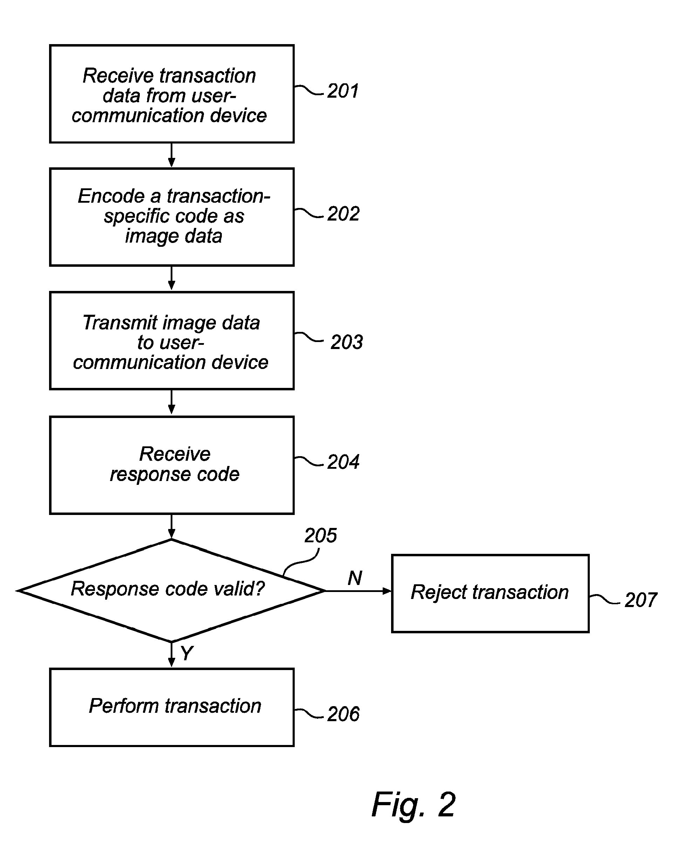

When carrying out an exemplary transaction requested by a user, say user 2b, the following method, schematically illustrated in fig 2, is typically performed by the transaction server system 3 according to the present invention.

Referring to fig 2, the transaction server system 3, in a first step 201, receives transaction data from the user-communication device 4b associated with the user 2b. The transaction data may be any kind of data related to a transaction, which the user 2b would like to perform, such as, for example, a login request, possibly including a user ID, or data related to a transfer of funds between accounts.

In a following step 202, the transaction server system 3 encodes a transaction-specific code as image data. The transaction-specific code may be a challenge code, in response to which a response code is expected, or it may be a code indicative of the requested transfer, in response to which a signature is expected.

Subsequently, in step 203, the image data is transmitted, over the network 5, to the user-communication device 4b, such that the image can be displayed to the user 2b on the display of the user-communication device 4b.

In the next step 204, the transaction server system 3 receives a response code from the user-communication device 4b. In case of a login attempt, the response code may include user authentication and, when applicable, user ID, and in the case of, for example, a transfer of funds, the response code may include a signature linking the user 2b to the ordered transfer.

The response code is evaluated in step 205.

If the evaluation performed in step 205 indicates that the response code is a valid response to the transaction-specific code, the transaction is performed in step 206, and, if the response code is invalid, the transaction is rejected in step 207.

The code-generating device 6 will now be described in greater detail with reference to figs 3 and 4.

Fig 3 shows a plane view of a preferred embodiment of the code-generating device according to the present invention from the front and from the side, where the code-generating device 6 is equipped with a display 10, a key pad 11, a camera 12 and a slot 13 for receiving a removable cryptographic module in the form of a smart card 14.

Fig 4 is a block diagram schematically illustrating the functional configuration of the code-generating device 6 in fig 3, where a microprocessor 20 is connected to the keypad 11, the display 10, and a camera module 12 comprising a lens 21 and a solid state image sensor 22, such as a CMOS sensor or a CCD sensor. Both the camera module 12 and the microprocessor 20 are connected to a 2D barcode decoder 23 in order to enable rapid decoding of data encoded in the 2D barcode 24 acquired through the camera module 12.

When the smart card 14 is inserted in the slot 13 (see fig 3), the microprocessor is also connected to the cryptographic module 25 comprised in the secure chip on the smart card 14.

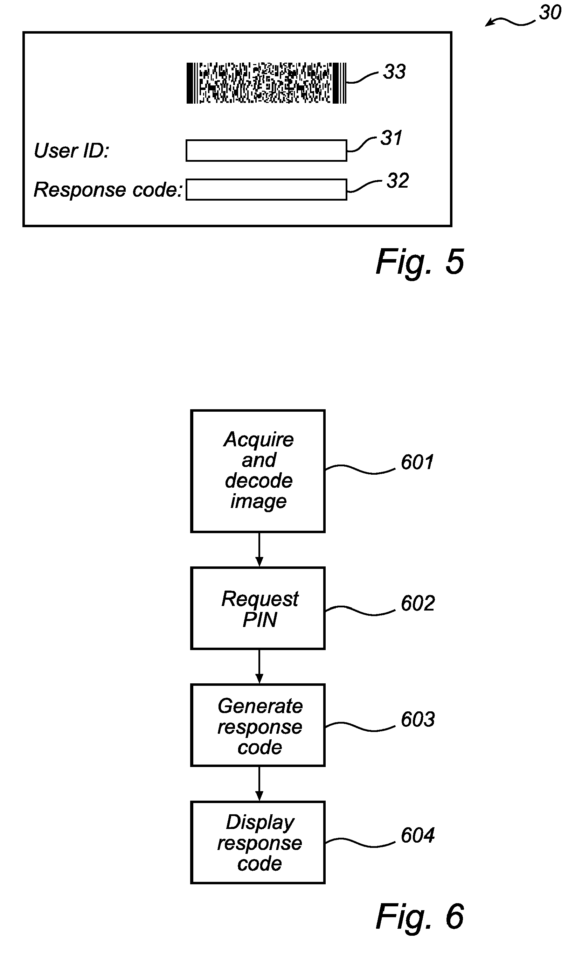

In the following, various embodiments of the method according to the present invention will be described with reference to figs 5 to 12.

In fig 5, a first example of a screen image 30 presented to, say, user 2b when interacting with the transaction server system 3 in fig 1 is shown, illustrating a login attempt. The screen image 30 includes a box 31 for input of user ID, a box 32 for input of a response code and a 2D barcode 33. According to the present example, the 2D barcode 33 is displayed to the user prior to entry of the user ID in the therefore intended box 31, and thus typically does not contain any user-specific information. Alternatively, the user may first be prompted to enter his user ID in the box 31, to thereafter be presented with an image 33 which may then be specific for the claimed user.

A first embodiment of the method according to the invention, carried out in response to the display image in fig 5, will now be described with reference to fig 6.

As illustrated in fig 6, an image is acquired and decoded in a first step 601. The image, in this case, the 2D barcode 33 is acquired using the camera module 12 of the code-generating device 6b. The image acquisition is controlled by the microcontroller 20 and is typically initiated by an action from the user 2b, such as an actuation of one of the keys on the key pad 11 or by means of a user input device (not shown) which is dedicated to operation of the camera module 12.

The decoding of the 2D barcode 33 may be performed by the microprocessor 20, by the camera module 12, or by a dedicated decoder 23.

In order to secure user presence, a PIN is requested in step 602. The PIN-request is communicated to the user 2b via the display 10. After having received, via the key pad 11 or other user input device, and verified the PIN, a response code is generated in step 603.

This response code, which is typically a so-called challenge response code, is generally generated through interaction with the cryptographic module 25, which may either be included in a removable carrier, such as a smart card 14, or incorporated in the code-generating device 6b itself.

In either case, the generated response code is, in step 604, displayed to the user 2b through the display 10, whereby the user 2b is enabled to enter the response code in the appropriate text box 32.

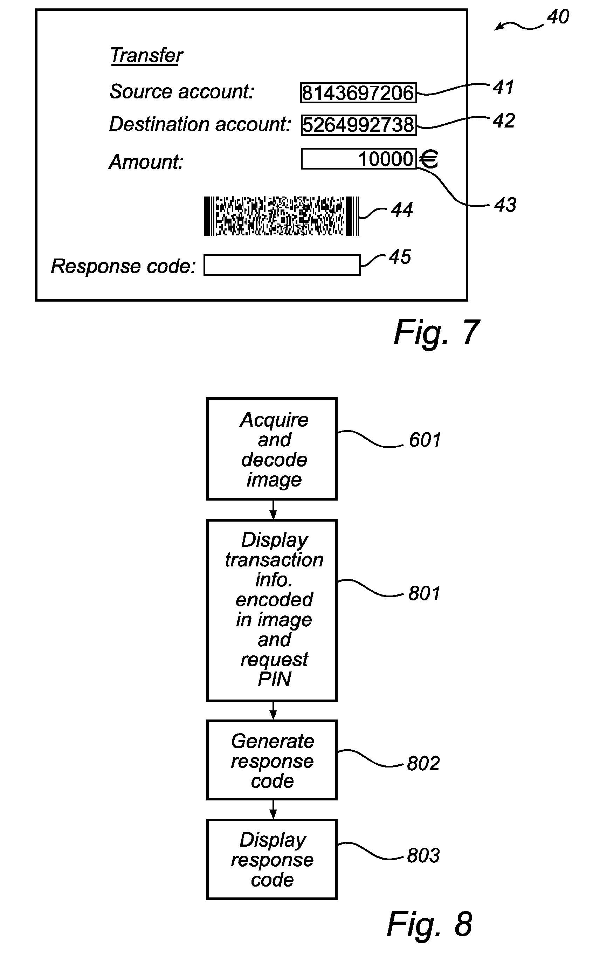

Fig 7 schematically illustrates a second example of a screen image 40 presented to the user 2b following a user request for a money transfer between accounts in the secure transaction system 1 in fig 1.

As shown in fig 7, the user 2b has entered a source account number 8143697206, a destination account number 5264992738, and an amount to be transferred 10 000 € in the appropriate boxes 41-43. The screen image 40 also includes a 2D barcode 44 generated by the transaction server system 3 based upon the transaction details entered in the input boxes 41-43, and a text box 45 for entry of a response code, whereby the user 2b confirms the requested transfer of funds.

A second embodiment of the method according to the invention, which may be carried out in response to the display image in fig 7, will now be described with reference to fig 8.

The method described with reference to fig 8 differs from that according to fig 6 in that the transaction-specific code encoded by the displayed 2D barcode 44 includes encrypted transaction information. Following acquisition and decoding (step 601) of the image as previously described, the encrypted transaction-specific code is decrypted using the user's 2b cryptographic module 25, and the decrypted transaction information is displayed to the user 2b on the display 10 of the code-generating device 6b, in step 801. Hereby, the user 2b can, in the secure environment of his code-generating device 6b in co-operation with his personal cryptographic module carried by the smart card 14, verify that the transaction details (the source account, the destination account, and the amount to be transferred) are correct. When displaying the transaction information, the code-generating device 6b also requests the user 2b to input a PIN to acknowledge his acceptance of the displayed information.

After having received and verified the PIN provided by the user 2b, a response code is generated in step 802.

The response code preferably includes information indicative of transaction details, user ID, and that the user 2b has reviewed and acknowledged the transaction details in the the code-generating device 6b.

The generated response code is, in step 803, displayed to the user 2b through the display 10, whereby the user 2b is enabled to enter the response code in the appropriate text box 45.

In the following, a number of examples will be provided, illustrating embodiments of the present invention in which dynamic security through "remote controlled" interaction between a user and his code-generating device is implemented.

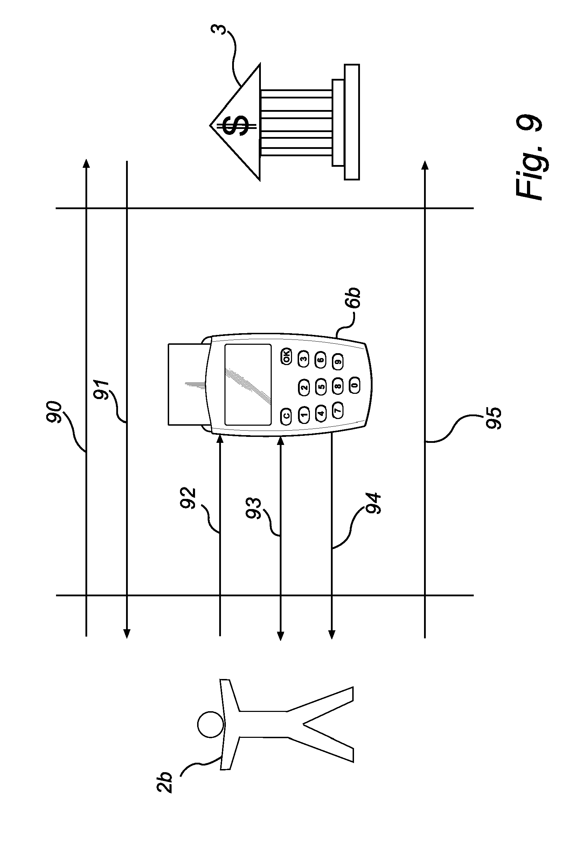

First, the information exchange, occurring during a transaction involving dynamic security, between a user, say user 2b in fig 1, and the transaction service provider 3, and between the user 2b and his code-generating device 6b will be described with reference to fig 9.

In fig 9, events involving flow of information between the parties 2b, 3, 6b is illustrated by arrows, where events occur sequentially from top to bottom in fig 9.

The first event in the exemplary transaction is a transaction request transmitted from the user 2b (via his user-communication device 4b) to the transaction service provider 3. This event is represented by the top arrow 90 extending from left to right in fig 9.

In response to the transaction request 90, the transaction service provider provides, as indicated by the arrow 91 extending from right to left, a transaction-specific code, which is, in the present example, encoded in an image that is acquired through the image acquisition unit 12 comprised in the code-generating device 6b. Following decoding of the image, as described above, the code-generating device 6b performs a sequence of predetermined functions determined by the transaction-specific code. Each function involves prompting the user 2b to indicate a function-related value through the user input device of the code-generating device 6b. This two-way exchange between the user 2b and his code-generating device 6b is represented by the arrow 92 in fig 9.

Following the final input in the sequence of function-related values, the code-generating device 6b provides a response code to the user 2b. This is indicated by the next arrow 93 in fig 9.

This response code is then transmitted by the user 2b, via his user-communication device 4b to the transaction service provider 3, as indicated by the final arrow 94 in fig 9.

As is illustrated in fig 9, an "unconnected", or "off-line", signing procedure is carried out, in which the user 2b interacts with his code-generating device 6b. This unconnected signing procedure is secured, and is, furthermore, determined by the transaction service provider 3 through the transaction-specific code provided by the transaction service provider 3 (arrow 91).

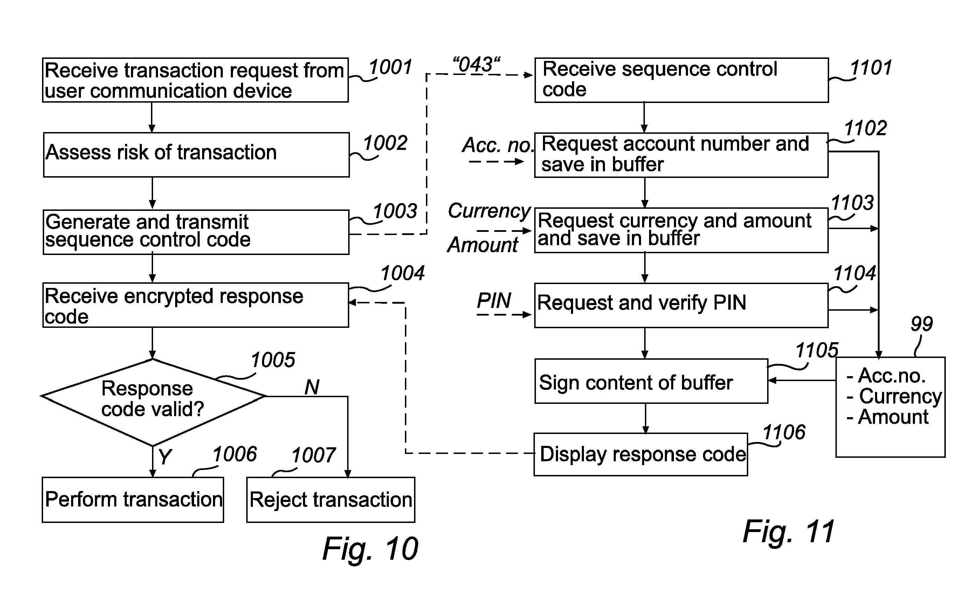

The transaction procedure, and in particular the unconnected signing procedure schematically illustrated in fig 9 will now be elucidated further with reference to the flow-charts in figs 10 and 11.

The flow-chart in fig 10 schematically illustrates the procedure carried out by the transaction server system according to an embodiment of the present invention, while the flow-chart in fig 11 schematically illustrates the procedure carried out by the code-generating device according to an embodiment of the present invention, in case of a "high risk" transaction.

Referring first to fig 10, the transaction request is received from the user-communication device (for example 4b in fig 1) in a first step 1001. In the subsequent step 1002, the transaction server system performs a risk assessment based on the transaction request. The risk assessment may be based on factors such as the kind of transaction requested, the status of the user requesting the transaction, the origin of the transaction (for example IP-number), the destination of the transaction (if the transaction involves transfer of funds), the history of similar transactions, etc, or a combination of such factors.

Based on the result of the risk assessment performed in step 1002, the transaction server system 3, in the following step 1003, generates a sequence control code, i.e. a code indicative of a sequence of predetermined functions to be performed by the code-generating device 6b associated with the user 2b, from whom the transaction request originated, and transmits this sequence control code to the user-communication device 4b. The sequence control code may be included in the transaction-specific code which is encoded in the image provided by the transaction service provider, or may be provided separately. In the presently described example, it is assumed that the sequence control code is provided as a separate code for manual entry by the user 2b, and the step of encoding a transaction-specific code as an image to be transmitted to the user 2b via his user-communication device 4b has been omitted for clarity of drawing.

Examples of such sequence control codes and associated predetermined functions are provided below in table 1. It should be noted that these codes and functions are provided for exemplifying purposes only, and should by no means be construed as limiting the scope of the present invention.

**Table 1:**

| **Code** | **Function name** | **Description** |
|---|---|---|
| '2' | Challenge | Request for user entry of a "challenge" of 0-8 digits. (Challenge or hash of transaction data.) |
| '3' | Currency and Amount | Request for user entry of a currency and an amount of 1-12 digits. |
| '4' | Destination Account | Request for user entry of a beneficiary account 1-36 digits |
| '5' | Bank Code Number | Request for user entry of a bank code, 1-<n> digits |
| '6' | Number of Items | Request for user entry of a numerical value. For example used to signify number of units, such as stocks, in a transactions. A numerical value, 1-6 digits. |
| '7' | Invoice ID/Reference | Request for user entry of "reference" number, 0-36 digits |
| '10' | Payment Alert | Display: "Payment, OK?" |
| '11' | National Transfers Alert | Display: "National Transfer, OK?" |
| '12' | Recurring Payment Alert | Display: "Recurring payment, OK?" |
| '13' | International Transfers Alert | Display: "International Transfer, OK?" |
| '14' | Change of Personal Setting | Display: "Address Change, OK?" |

Assume now that the risk assessment performed in step 1002 indicated that the requested transaction is a high risk transaction of such a kind that the transaction service provider 3 would require the user to actively confirm the destination account, and the currency and amount to be transferred to that account.

Referring to the exemplary functions and their associated codes provided in table 1, the user 2b would then be instructed by the transaction service provider 3, to enter the transaction-specific code '043' in his code-generating device 6b. The first digit in the code, the '0', here indicates that the dynamic security functionality of the code-generating device 6b should be invoked. The second and third digits '43' indicate that the predetermined functions '4' (Destination Account) and '3' (Currency and Amount) should be performed in sequence by the code-generating device 6b.

Temporarily leaving fig 10 at this stage, the procedure carried out by the code-generating device 6b in response to the entry of the transaction-specific code '043' will now be described in detail with reference to fig 11.

In fig 11, the step of acquiring an image encoding a transaction-specific code, generated by the transaction service provider 3 has been omitted for the sake of clarity of drawing. Due to the omission of the acquiring step, the code-generating device 6b receives the transaction-specific code '043' in a first step 1101. The code-generating device 6b then evaluates the code sequentially, digit by digit, and first enters the "dynamic" mode as encoded by the first digit '0'. The code-generating device 6b thereafter moves on to decoding the remainder of the transaction-specific code, and, in step 1102, performs the first function ('4') of requesting user entry of the destination account number. Following input by the user 2b of the destination account number, this value is stored at a predetermined location in a signing buffer 99. Subsequently, in step 1103, the second function ('3') of requesting the user 2b to enter the currency and amount to be transferred is performed. The values indicative of currency and amount which are entered into the code-generating device 6b by the user 2b are stored in corresponding predetermined locations in the signing buffer 99.

In the next step 1104, the code-generating device 6b requests the user to enter his PIN to demonstrate user presence.

When the entire sequence of functions requested by the transaction service provider 3 has been performed, and the corresponding sequence of function-related values has been stored in the signing buffer 99, the content of the signing buffer 99 is signed by the code-generating device 6b in the following step 1105. This signing typically takes place utilizing a cryptographic module, which may be provided in the code-generating device 6b itself or on a smart card with which the code-generating device 6b is configured to interact.

Finally, in step 1106, the response code is displayed to the user 2b, who can then transmit the response code to the transaction server system via his user-communication device 4b.

Having now concluded the procedure carried out in the code-generating device, corresponding to the arrows 91, 92 and 93 in fig 9, the remaining steps carried out by the transaction server system 3 will now be described with continued reference to fig 10.

As indicated in fig 10, the transaction server system 3 receives the response code, generated by the code-generating device 6b, in step 1004.

In the subsequent step 1005, the response code is evaluated.

If the evaluation performed in step 1005 indicates that the response code is a valid response to the transaction-specific code, the transaction is performed in step 1006, and, if the response code is invalid, the transaction is rejected in step 1007.

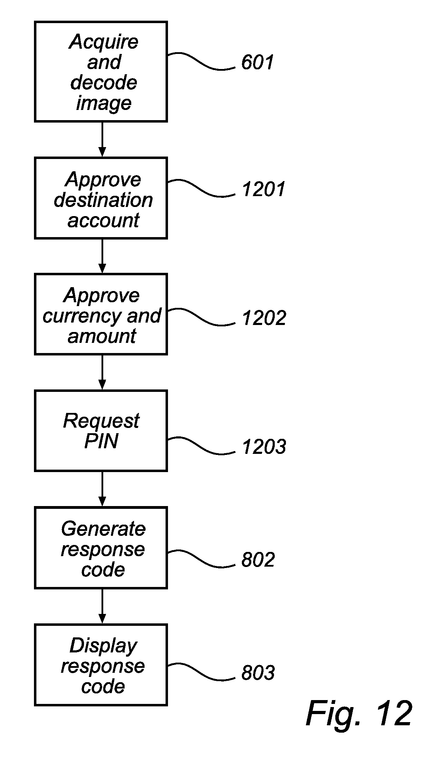

A third embodiment of the method according to the invention, carried out in response to the display image in fig 7, will now be described with reference to fig 12.

The method described with reference to fig 12 differs from that according to figs 6 and 8 in that the transaction-specific code encoded by the displayed 2D barcode 44 includes a code indicative of a sequence of functions to be performed by the code-generating device 6b before a response code can be generated.

Following acquisition and decoding (step 601) of the image as previously described, the code encoded by the 2D barcode 44 is evaluated by the code-generating device 6b to determine which sequence of functions is required by the transaction service provider for this particular transaction.

The flow-chart in fig 12 illustrates a case when the risk of the transaction is considered as high, and the transaction service provider therefore transmits an image 44 to the user communication device 4b encoding a transaction-specific code including a code indicative of an sequence of predetermined functions offering a high level of security and non-repudiation for the transaction.

In the present example, the user is, in step 1201, requested to indicate his approval of the destination account for the money transfer, which is displayed in the display of the code-generating device 6b. Thereafter, in step 1202, the user 2b is requested to approve the currency and amount to be transferred.

By indicating the destination account, the currency and the amount for the requested transfer, the user 2b has actively expressed an act of will to perform the transfer. Following the entries in steps 1201 and 1202 of transaction-specific information, the user is, in step 1203, requested to finally authenticate the information previously entered in the code-generating device 6b through the entry of his PIN.

Thereafter, the signature is, in step 802, generated as described above in connection with fig 8, based upon the sequence of function-related values indicated by the user 2b during the above-described authentication sequence.

Finally the response code is displayed to the user in step 803, such that the user 2b can enter the response code (digital signature) in the appropriate text box 45 to thereby authorize the transaction.

Included in the response code, the transaction service provider will, at a high level of security, be able to verify what has been signed, by whom it has been signed, and will receive a very strong indication of act-of-will on behalf of the user 2b.

The person skilled in the art realizes that the present invention by no means is limited to the preferred embodiments described above. For example, the response code generated in the code-generating device need not be displayed to the user, but may be provided directly from the code-generating device to the user communication device or the transaction server system.

Furthermore, the coding of each function, and the indication of a function-related value requested by user will be dependent on the particular implementation and on who will be using this technology, banks, stockbrokers, etc.

Moreover, it should be understood that either a user-entered value, such as a PIN, or a representation or indication thereof may be used for determination of the transaction-specific response code.

Additionally, the transaction specific code may include a code for uniquely identifying the transaction service provider. This code may then be used to select which one of a plurality of stored cryptographic keys to use for the processing of the transaction specific code.

## Claims

1. A code-generating device (6a-c) for enabling secure and user-friendly interaction between a user (2a-c) and a transaction service provider (3), said code-generating device having:
an image acquisition unit (12); and
processing circuitry (20) configured to interact with a cryptographic module (25),
wherein said processing circuitry (20) is adapted to:
acquire, through said image acquisition unit (12), an image (33; 44) provided by said transaction service provider (3), said image encoding a transaction-specific code;
decode said image (33; 44) to generate said transaction-specific code; and
process said transaction-specific code, utilizing said cryptographic module (25) for at least a part of said processing, such that a response code is generated, said response code being unique for said user (2a-c) and verifiable by said transaction service provider (3), thereby enabling secure authentication of said transaction.

2. A code-generating device (6a-c) according to claim 1, wherein said processing circuitry (20) is further adapted to:
display said response code to said user by means of a display device (10) comprised in said code-generating device (6a-c).

3. A code-generating device (6a-c) according to claim 1 or 2, wherein said processing circuitry (20) is further configured to perform a cryptographic operation on said transaction-specific code to generate a message authentication code unique for said transaction-specific code, thereby enabling verification of said transaction-specific code.

4. A code-generating device (6a-c) according to any one of the preceding claims, wherein said processing circuitry (20) is further adapted to:
request said user to enter a personal identification number prior to generating said response code.

5. A code-generating device (6a-c) according to any one of the preceding claims, wherein said processing circuitry (20) is further configured to:
receive a code indicative of a transaction-specific sequence of predetermined functions to be performed by said code-generating device (6a-c), each of said predetermined functions involving prompting said user to indicate a respective function-related value;
evaluate said code indicative of said transaction-specific sequence;
perform, based on said evaluation, said transaction-specific sequence of predetermined functions, resulting in a sequence of function-related values indicated by the user; and
determine said response code based on said sequence of function-related values.

6. A code-generating device (6a-c) according to claim 5, wherein said code indicative of said transaction-specific sequence of predetermined functions is included in said transaction-specific code encoded in said acquired image (33; 44).

7. A code-generating device (6a-c) according to claim 5 or 6, wherein said sequence of function-related values includes at least one of a personal identification number, and a transaction-specific value.

8. A code-generating device (6a-c) according to any one of the preceding claims, wherein said image includes a barcode (33; 44).

9. A code-generating device (6a-c) according to any one of the preceding claims, wherein said response code includes a one time code.

10. A code-generating device (6a-c) according to any one of claims 1 to 8, wherein said response code includes a signature.

11. A code-generating device (6a-c) according to any one of the preceding claims, further configured to:
decrypt encrypted transaction information comprised in said transaction-specific code; and
display said decrypted transaction information to said user by means of a display unit (10) comprised in said code-generating device (6a-c).

12. A code-generating device (6a-c) according to any one of the preceding claims, further comprising a connector for connecting said processing circuitry (29) to a removably arranged electronic circuit comprising said cryptographic module (25).

13. A code-generating device (6a-c) according to any one of claims 1 to 11, wherein said cryptographic module (25) is comprised in said processing circuitry (20).

14. A transaction server system (3) comprising:
a database (7) for storing user data;
a network interface (9) for enabling communication with a plurality of user communication devices (4a-c) over a network (5); and
processing circuitry (8) for performing transaction operations, wherein said processing circuitry (8) is adapted to:
encode a transaction-specific code into transaction-specific image data;
transmit, to a user-communication device, said transaction-specific image data, thereby enabling display of said image (33; 44) to a user (2a-c);
receive a response code from said user-communication device (4a-c);
evaluate said response code; and
if said response code is valid, carry out said transaction.

15. A transaction server system (3) according to claim 14, wherein said processing circuitry (8) is further configured to encode an authentication code into said transaction-specific image data for enabling authentication of said transaction-specific code.

16. A transaction server system (3) according to claim 15, wherein said authentication code is obtained by performing a cryptographic operation on said transaction-specific code.

17. A transaction server system (3) according to any one of claims 14 to 16, wherein said processing circuitry (8) is further adapted to:
perform a risk assessment for a requested transaction; and
determine said transaction-specific code based on said risk assessment, said transaction-specific code comprising a code indicative of a sequence of predetermined functions to be performed by a code-generating device (6a-c) associated with a user (2a-c) having requested said transaction.

18. A transaction server system (3) according to any one of claims 14 to 17, wherein said image data corresponds to a barcode.

19. A secure transaction system (1) comprising:
a code-generating device (6a-c) according to any one of claims 1 to 13;
a transaction server system (3) according to any one of claims 14 to 18; and
a user communication device (4a-c) which is in secure connection with said transaction server system (3) and configured to display an image (33; 44) to the user, and to receive transaction-related input from said user (2a-c).

20. A secure transaction system (1) according to claim 19, wherein said user communication device is a personal computer (4a-c).

21. A secure transaction system (1) according to claim 19, wherein said user communication device is a mobile phone.

22. A secure transaction system according to claim 19, wherein said user communication device is an automated teller machine.

23. A method, for enabling secure and user-friendly interaction between a transaction service provider (3) and a user (2a-c) having a code-generating device (6a-c), said code-generating device (6a-c) including:
an image acquisition unit (12); and
processing circuitry (20) adapted to interact with a cryptographic module (25),
said method comprising the steps of:
acquiring (601), by means of said image acquisition unit (12), an image (33; 44) provided by said transaction service provider (3), said image encoding a transaction-specific code;
decoding (601) said image (33; 44) to generate said transaction-specific code;
processing said decoded transaction-specific code, utilizing said cryptographic module (25) for at least a part of said processing, such that a response code is generated, said response code being unique for said user (2a-c) and verifiable by said transaction service provider (3), thereby enabling secure authentication of said transaction.

24. A computer program module configured to perform the steps of the method according to claim 23 when run on processing circuitry (20) comprised in a code-generating device (6a-c) according to any one of claims 1 to 13.
